# EUROPÄISCHE PATENTSCHRIFT

(11) **EP 2 487 301 B1**
(45) Veröffentlichungstag und Bekanntmachung des Hinweises auf die Patenterteilung: **06.09.2017**
(21) Anmeldenummer: 11007453.1
(22) Anmeldetag: 14.09.2011
(51) Int. Cl.: E03B 7/04, E03B 7/07, E03C 1/044, C02F 1/00, F16K 31/00, G05D 23/00

(54) **Trink- oder Brauchwassersystem**
Drinking water or sanitary water system
Système d'eau potable ou d'eau sanitaire

(30) Priorität: 10.02.2011 DE 102011010840
(43) Veröffentlichungstag der Anmeldung: 15.08.2012
(60) Teilanmeldung: 16151883.2
(73) Patentinhaber: Oventrop GmbH & Co. KG, 59939 Olsberg (DE)
(72) Erfinder: Coerdt, Martin, 59939 Olsberg (DE); Foitzik, Roland, Dr., 59939 Olsberg (DE)
(74) Vertreter: Köchling, Conrad-Joachim

(56) Entgegenhaltungen:
- WO-A1-2005/098318
- DE-A1- 10 056 715
- DE-A1-102005 038 699
- GB-A- 2 261 464
- JP-A- H04 100 588
- US-A- 1 960 782

## Beschreibung

Die Erfindung betrifft ein Trink- oder Brauchwassersystem mit einem Leitungssystem, das einen Anschluss an ein öffentliches Wasserversorgungsnetz aufweist, sowie mindestens einen Vorlaufstrang oder Steigstrang mit mindestens einem davon abzweigenden Stockwerksstrang und/oder mindestens einer in Durchströmrichtung des Wassers vom Steigstrang und/oder vom Stockwerksstrang abgezweigten Ringleitung, sowie mindestens einem am Steigstrang und/oder am Stockwerksstrang und/oder in der Ringleitung angeschlossenen Verbraucher sowie einem Rücklaufstrang, in den der Vorlaufsstrang und/oder der Steigstrang und/oder der Stockwerksstrang und/oder die Ringleitung mündet, wobei das Leitungssystem aus Vorlaufstrang oder Steigstrang und Rücklaufstrang einen geschlossenen Zirkulationsstrang bildet, und dass in diesen Zirkulationsstrang eine Einrichtung zur Kühlung des durchströmenden Wassers integriert ist, mittels derer das Trink- oder Brauchwasser auf eine vorbestimmte Temperatur kühlbar ist oder gekühlt wird.

Insbesondere betrifft die Erfindung ein System, indem kaltes Trink- oder Brauchwasser bereitgestellt wird. Wie in Systemen für warmes Trink- und Brauchwasser kann es auch in Systemen mit kalten Wasser zu einem Wachstum von Keimen, wie Pseudomonas aeruginosa (nachfolgend als Pseudomonaden bezeichnet) oder Legionellen kommen, wenn sich die Wassertemperatur in dem für das Wachstum günstigen Bereich zwischen 9 ° und 42 ° C. befindet. Es wird hierzu auf die Literaturstelle "Mikrobiologisch-hygienische Aspekte des Vorkommens von Pseudomonas aeruginosa im Trinkwasser, Energie/Wasser-Praxis 3, 2009" verwiesen.

Bei Systemen, die beispielsweise wie in der EP 1 845 207 A1 beschrieben, als Ringleitungen ausgeführt sind, muss für das Erreichen einer einwandfreien Trinkwasserqualität sowie zur Verhinderung einer Erwärmung des Kaltwassers auf unzulässige hohe Temperaturen, die Anlage regelmäßig gespült werden. Hierdurch steigt der Wasserverbrauch stark an und ebenso die damit verbundenen Betriebskosten. Betrachtet man das Trinkwasser wie ein Lebensmittel, sollte das Wasser auf eine Temperatur von unter 9 ° C. gehalten werden. Es wird hierzu auf die oben genannte Literaturstelle verwiesen.

In der GB 2 261 464 A, der US 1 960 782 A und der JP H04 100588 A wird die Kühlung von Wasser beschrieben.

Gerade im Hochsommer kann es vorkommen, dass das von den Wasserversorgern gelieferte Frischwasser diese Temperatur bereits deutlich übersteigt. Es wird hierzu auf die Literaturstelle "Legionellenvermehrung in Kaltwasserleitungen, Arbeitskreistrinkwasserinstallation und Hygiene, RAS 06/ 2010" verwiesen. Selbst durch dauerhaftes Spülen der Leitungen ist somit eine Gefahr der Verkeimung nicht auszuschließen.

Aus der EP 1 845 207 A1 ist ein entsprechendes System bekannt, bei dem bei Einleitung der Spülung alle Ringleitungen gleichzeitig gespült werden. Dabei wird ein Ventil eingesetzt, mit dem eine gleichmäßige Spülung aller Ringleitungen ermöglicht wird. Die Spülung erfolgt in regelmäßigen Zeit-Abständen, wobei es unerheblich ist, ob in den Ringleitungen eine erhöhte Wassertemperatur vorliegt oder nicht. Das heißt, es erfolgt bei jeder Spülung ein kompletter, jedoch unkontrollierter Austausch des Wassers in der gesamten Anlage.

Ausgehend von diesem Stand der Technik liegt der Erfindung die Aufgabe zugrunde, ein Trink- oder Brauchwassersystem zu schaffen, mit dem unter Vermeidung von hohem Wasserverbrauch und damit verbundenen Betriebskosten sichergestellt werden kann, dass das im System befindliche Wasser hygienischen Bedingungen genügt, also keine unzulässig hohen Konzentrationen von Keimen, insbesondere von Pseudomonaden, entstehen.

Zur Lösung dieser Aufgabe schlägt die Erfindung vor, dass in eine oder jede Ringleitung mit wenigstens einem Verbraucher ein geregeltes Strangregulierventil eingeschaltet ist, welches in Abhängigkeit von einer einstellbaren Temperatur bei oberhalb eines Sollwertes liegender Temperatur des die Ringleitung durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise innerhalb der Ringleitung deren in Strömungsrichtung letztem Verbraucher nachgeschaltet ist oder in eine Einbindearmatur zwischen Ringleitung und Hauptleitung des Leitungssystems integriert ist oder dass mindestens in einen oder jeden Stockwerksstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise in den Stockwerksstrang dem darin integrierten in Strömungsrichtung des Wassers letzten Verbraucher nachgeschaltet ist oder in eine Einbindearmatur zwischen Stockwerksstrang und Hauptleitung des Leitungssystems integriert ist oder dass mindestens in einen Steigstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wasser den Durchfluss bis zu einem maximalen Wert öffnet und bei darunter liegender Temperatur den Durchfluss auf einen minimalen Wert begrenzt, wobei das Strangregulierventil vorzugsweise dem in Strömungsrichtung letzten Verbraucher nachgeschaltet ist.

Durch diese Ausbildung wird erreicht, dass das in dem Leitungssystem befindliche Wasser vornehmlich gezielt in den entsprechenden Leitungen zirkulieren kann, wobei die Temperatur des im System durchströmenden Wassers auf eine vorbestimmte Temperatur gekühlt wird, also vorzugsweise unter 9 ° C., wodurch sichergestellt ist, dass das Wachstum von Keimen, insbesondere Pseudomonaden, unterdrückt wird. Dabei ist kein zusätzlicher Wasserbedarf erforderlich, da das Wasser in dem System zirkulieren kann und lediglich bestimmungsgemäß an den Verbrauchern abgezapft werden kann. Das zirkulierende Wasser wird dabei durch eine Einrichtung zur Kühlung geleitet, beispielsweise ein Kühlaggregat, welches das Wasser auf eine hygienisch vorteilhafte Temperatur, vorzugsweise unter 9 ° C., herunterkühlt. Anstelle einer direkten Durchleitung durch ein Kühlaggregat kann das Kühlen des Wassers auch durch einen Kaltwasserspeicher erfolgen, welcher durch ein Kühlaggregat beschickt wird.

Um eine ausreichende Durchströmung aller Anlagenteile zu erreichen und die hydraulische Einregulierung temperaturabhängig zu gestalten, um damit bevorzugt eine Kaltwassertemperatur von 9 ° C aufrecht zu erhalten, wird vorgeschlagen, dass in eine oder jede Ringleitung mit wenigstens einem Verbraucher ein geregeltes Strangregulierventil eingeschaltet ist, welches in Abhängigkeit von einer einstellbaren Temperatur bei oberhalb eines Sollwertes liegender Temperatur des die Ringleitung durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise innerhalb der Ringleitung deren in Strömungsrichtung letztem Verbraucher nachgeschaltet ist oder in eine Einbindearmatur zwischen Ringleitung und Hauptleitung des Leitungssystems integriert ist.

Hierbei wird also zum Erreichen einer gezielten Zirkulation vorgeschlagen, die Ringleitungen mit einem geregelten Strangregulierventil zu kombinieren, welches unterhalb der am Ventil eingestellten Temperatur nur einen Restvolumenstrom durch das Ventil zulässt. Wird die am Ventil eingestellte Temperatur überschritten, so wird dies durch den Temperaturfühler des Ventils erfasst und das Ventil geöffnet, so dass die Ringleitung voll durchströmt wird. Bei Erreichen der Zieltemperatur, also beispielsweise 9 ° C., wird der Durchgang durch das Ventil wieder auf einen Restvolumenstrom begrenzt, weil der Temperaturfühler des Ventiles das Ventil in eine Stellung einstellt, in der nur ein Restvolumenstrom durch das Ventil fließt.

Dieser Restvolumenstrom ist notwendig, um eine ständige Umspülung des Temperaturfühlers im Ventil zu gewährleisten und damit eine ständige Erfassung der aktuellen Temperatur im jeweiligen Ring oder Strang zu erzielen. Durch das temperaturabhängige Öffnen des Ventils auf vollen Durchlass werden die einzelnen Abschnitte nur so lange voll durchströmt, bis die Zieltemperatur erreicht ist beziehungsweise nur dann, wenn die Zieltemperatur überschritten ist.

Aus dem gleichen Grunde kann die Erfindung alternativ vorsehen, dass mindestens in einen oder jeden Stockwerksstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wassers den Durchfluss bis zu einem maximalen Wert öffnet und bei darunter liegender Temperatur den Durchfluss auf einen minimalen Wert begrenzt, wobei das Strangregulierventil vorzugsweise in dem Stockwerksstrang dem darin integrierten in Strömungsrichtung des Wassers letzten Verbraucher nachgeschaltet ist oder in eine Einbindearmatur zwischen Stockwerksstrang und Hauptleitung des Leitungssystems integriert ist.

Ebenso aus dem gleichen Grunde kann die Erfindung alternativ vorsehen, dass mindestens in einen Steigstrang mit mindestens einem Verbraucher ein geregeltes Strangregulierventil eingeschaltet ist, welches in Abhängigkeit von einer einstellbaren Temperatur bei oberhalb eines Sollwertes liegender Temperatur des den Strang durchströmenden Wasser den Durchfluss bis zu einem maximalen Wert öffnet und bei darunter liegender Temperatur den Durchfluss auf einen minimalen Wert begrenzt, wobei das Strangregulierventil vorzugsweise dem in Strömungsrichtung letzten Verbraucher nachgeschaltet ist.

Unter Umständen kann dabei vorgesehen sein, dass der Anschluss an das Wasserversorgungsnetz zwischen den Ausgang der Kühleinrichtung und den Vorlauf- oder Steigstrang geschaltet ist.

Bei dieser Lösung wird davon ausgegangen, dass das Wasserversorgungsnetz das zugeführte Wasser mit ausreichend niedriger Temperatur zur Verfügung gestellt. In diesem Falle kann der Anschluss an das Wasserversorgungsnetz zwischen den Ausgang der Kühleinrichtung und den Vorlauf- oder Steigstrang geschaltet sein.

Insbesondere im Sommer, also bei hohen Außentemperaturen ist nicht immer sichergestellt, dass das Wasser aus dem Wasserversorgungsnetz ausreichend niedrige Temperatur aufweist.

Aus diesem Grunde ist bevorzugt vorgesehen, dass der Anschluss an das Wasserversorgungsnetz in Strömungsrichtung vor den Eingang der Kühleinrichtung in die Ringleitung eingeschaltet ist.

Hierbei erfolgt die Zuleitung von Frischwasser aus dem Netz des Wasserversorgers bereits vor der Kühlung durch das Kühlaggregat oder den Kaltwasserspeicher. Somit wird auch bei hohen Außentemperaturen, wie zum Beispiel im Hochsommer, das aus dem Netz des Wasserversorgers zugeführte Frischwasser auf hygienisch vorteilhafte Temperatur gesenkt.

Um eine gleichmäßige Durchströmung aller Leitungssysteme zu erzielen, ist ein hydraulischer Abgleich der einzelnen Stränge untereinander erforderlich. Dies kann mit statischen Strangregulierventilen erfolgen, jedoch mit dem Nachteil, dass sich bei längerer Wasserentnahme in einigen Anlageteilen mangelhaft durchströmte andere Anlagenteile unzulässig erwärmen können.

Insbesondere ist dabei vorgesehen, dass das Strangregulierventil durch einen Temperaturmessfühler oder ein Temperatur erfassendes Stellglied gesteuert ist, welcher oder welches im Strömungsweg des Wassers durch das Strangregulierventil angeordnet ist.

In der normalen Betriebsweise sind die geregelten Strangregulierventile nicht alle gleichzeitig geöffnet, so dass der volle Druck des Zirkulationssystems für die Durchströmung des betreffenden Abschnittes zur Verfügung steht und somit ein zügiger Wasseraustausch in dem betreffenden Abschnitt erfolgen kann.

Zudem kann bevorzugt vorgesehen sein, dass zwischen den Anschluss an das öffentliche Wasserversorgungsnetz und das Leitungssystem ein Filter zur Herausfilterung von Keimen installiert ist.

Durch ein solches Filtersystem wird das aus dem Trinkwassernetz zufließende Frischwasser geleitet und eventuell vorhandene Keime, wie zum Beispiel Pseudomonaden oder Legionellen werden aus dem Wasser herausgefiltert.

Um eine ausreichende Zirkulation in dem System sicherzustellen, ist zudem vorgesehen, dass in dem Zirkulationssystem eine Zirkulationspumpe installiert ist.

Mit der erfindungsgemäßen Ausgestaltung werden wesentliche Vorteile erreicht. Beispielsweise wird eine unzulässige Erwärmung des im System durchströmenden Trinkwassers vermieden, wenn solche Leitungen für Trinkwasser parallel zu Versorgungsleitungen in Kanälen und Schächten verlegt sind und die Versorgungsleitungen höhere Temperaturen aufweisen oder von Medien durchströmt sind, die höhere Temperatur aufweisen.

Das Trinkwasser der Wasserversorgungsunternehmen kann dann, wenn es zu hohe Eingangstemperatur aufweist, in dem System auf eine Temperatur gekühlt werden, die ein Wachstum von Pseudomonaden oder anderen Verkeimungsarten unterbindet, wobei vorzugsweise der Anschluss für das zugeführte Frischwasser vor dem Eingang der Kühleinrichtung geschaltet ist.

Mit dem eingangsseitig des Systems installierten Filtersystem lassen sich Pseudomonaden und Legionellen zuverlässig abfiltern. In Verbindung mit der erfindungsgemäßen Kaltwasserzirkulationsanlage kann die Trinkwassertemperatur so bestimmt werden, dass behördliche Vorgaben, zum Beispiel für Krankenhäuser oder dergleichen, sicher eingehalten werden.

Ausführungsbeispiele der Erfindung sind in Zeichnungsfiguren dargestellt und im Folgenden näher beschrieben. Es zeigt:
- Figur 1: ein Zirkulationskühlsystem mit Kälteerzeuger und geregelten Strangregulierventilen in Ringleitungen;
- Figur 2, 2A: ein Zirkulationskühlsystem mit Kälteerzeuger und geregelten Strangregulierventilen in Stockwerkssträngen;
- Figur 3,3A: ein Zirkulationskühlsystem mit Kälteerzeuger mit geregelten Strangregulierventilen in den Steigsträngen;
- Figur 4: eine Schnittdarstellung eines Ventiles mit Ventileinsatz, wobei das Ventil in der Stellung "Restdurchfluss" ist und die eingestellte Temperatur der Mediumtemperatur entspricht;
- Figur 5: ein Detail X der Figur 4 in vergrößertem Maßstab;
- Figur 6: eine Schnittdarstellung des Ventils mit Ventilgehäuse und Ventileinsatz bei geöffnetem Ventil, wenn die Mediumtemperatur größer als die eingestellte Temperatur ist;
- Figur 7: das Detail Y der Figur 6 in vergrößerter Ansicht;
- Figur 8: eine Schnittdarstellung des Ventils mit Ventileinsatz bei geschlossenem Ventil;
- Figur 9: das Detail Z der Figur 8 in vergrößerter Detailansicht;
- Figur 10: eine Draufsicht auf ein Entsprechendes Ventil bei demontiertem Handrad zur Einstellung der Öffnungstemperatur;
- Figur 11: ein entsprechendes Ventil mit demontiertem Handrad zur Einstellung der Öffnungstemperatur in einer isometrischen Ansicht;
- Figur 12: eine Kombination eines Ventiles Mit einer Anschlussarmatur in Ansicht, teilweise geschnitten;
- Figur 13: einen Ventileinsatz im Mittellängsschnitt gesehen.

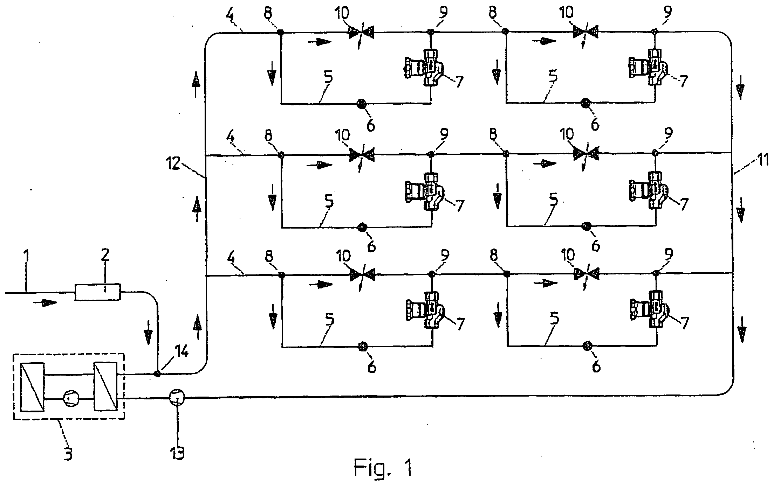

In Figur 1 ist ein erfindungsgemäßes Kaltwasserzirkulationssystem dargestellt. Hierbei wird das frische Wasser aus dem öffentlichen Trinkwassernetz über einen Anschluss 1 zugeführt und durch einen Filter 2 geleitet, welcher eventuell vorhandene Keime, wie zum Beispiel Pseudomonaden oder Legionellen, aus dem Frischwasser herausfiltert. Über eine Anschlussstelle 14 wird bei Zapfvorgängen das frische Wasser in das Zirkulationssystem geleitet. In dem Zirkulationssystem, welches nachfolgend noch beschrieben wird, wird die Zirkulation durch eine Zirkulationspumpe 13 aufrechterhalten. Das im Zirkulationskreis umlaufende Wasser wird durch eine Kühleinrichtung geleitet, welche das Wasser kühlt, vorzugsweise auf Temperaturen von unter 9 ° C, und so eine hygienisch vorteilhafte Temperatur im System sicherstellt. Das gekühlte Wasser wird in Pfeilrichtung durch das System geführt und dabei zunächst über den Steigstrang 12 auf die einzelnen Etagenstränge 4 verteilt. An die einzelnen Etagenstränge 4 sind über Abgänge 8 und Einmündungen 9 Ringleitungen 5 angeschlossen. Der Strömungsweg ist in den Ringleitungen 5 durch daneben befindliche Pfeile angegeben. In dieser Strömungsrichtung sind in den Ringleitungen 5 Verbraucher 6, wie zum Beispiel Dusche, Zapfstelle oder dergleichen vorgesehen sowie ein geregeltes Strangregulierventil 7. Das Strangregulierventil ist in der Ringleitung 5 dem letzten Verbraucher 6 nachgeschaltet. Es kann auch in eine Einbindearmatur integriert sein, die im Bereich der Einmündung 9 anzuordnen ist.

Das geregelte Strangregulierventil 7 lässt sich auf eine Solltemperatur einstellen, bei deren Überschreitung das geregelte Strangregulierventil 7, zum Beispiel mit Hilfe eines Thermofühlers, geöffnet wird, und bei deren Unterschreitung das Strangregulierventil 7 bis auf einen Restdurchfluss geschlossen wird. Dieser Restdurchfluss im geregelten Strangregulierventil 7 umspült den Thermofühler ständig und kann so die aktuelle Temperatur des Wassers in der Ringleitung 5 erfassen. Es ist dabei vorteilhaft, zwischen dem Abgang 8 und der Einmündung 9 der Ringleitung in den Etagenstrang 4 eine Drossel 10, beispielsweise ein statisches Regulier-Ventil mit einer Drosselfunktion, zu installieren, um eine hydraulischen Abgleich zwischen der Ringleitung 5 und dem Etagenstrang 4 zu schaffen und somit den Restdurchfluss in dem geregelten Strangregulierventil 7 zu gewährleisten.

Steigt die Temperatur in einer der Ringleitungen 5 über den am jeweiligen Strangregulierventil 7 eingestellten Wert, so wird der Durchgang durch das Strangregulierventil voll geöffnet und der Widerstand im Leitungssystem sinkt deutlich unter den Widerstand der einstellbaren Drossel 10. Dies führt dazu, dass der volle Zirkulationsstrom durch die Ringleitung 5 geführt wird, bis die gewünschte Wassertemperatur wieder in der Ringleitung 5 vorliegt, so dass das Strangregulierventil 7 sich in die Stellung mit minimalem Durchlass einstellt. Auf diese Weise wird erreicht, dass nur die Ringleitung 5 durchströmt wird, bei der die zulässige Solltemperatur überschritten wird, und dann mit dem maximalen Volumenstrom, so dass ein schneller Austausch mit frischem Wasser erfolgt.

In der Zeichnungsfigur ist rechts der Rücklaufstrang 11 gezeigt.

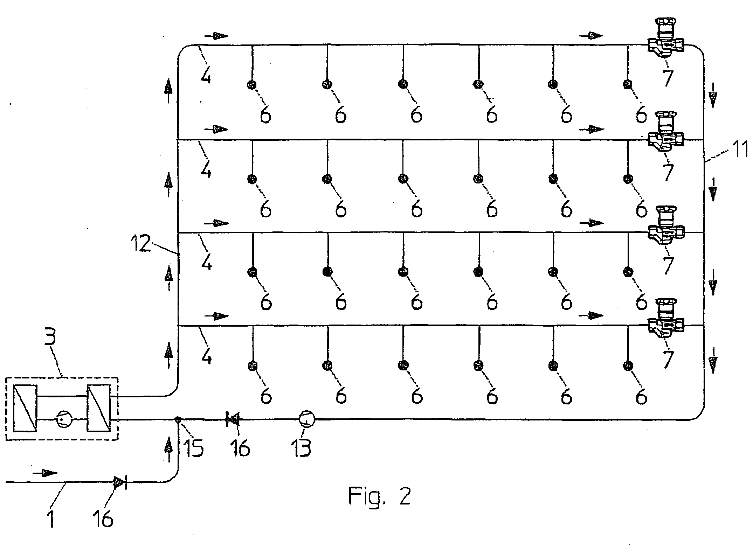

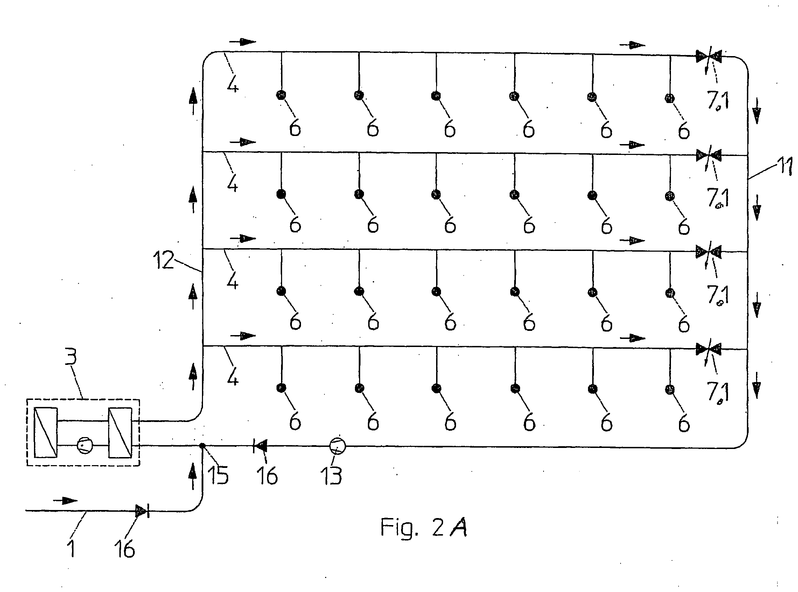

Die Figur 2, 2A zeigt eine weitere Ausführungsform eines Kaltwasserzirkulationssystems gemäß der Erfindung. In diesem Falle wird das Frischwasser aus dem öffentlichen Trinkwasserversorgungsnetz über den Anschluss 1 dem Zirkulationssystem in Strömungsrichtung vor der Kühleinrichtung 3 über eine Einmündung 15 zugeführt, so dass das zugeführte Frischwasser sofort gekühlt wird, was besonders vorteilhaft ist, wenn das Frischwasser zum Beispiel im Sommer eine erhöhte Temperatur hat. Die Zirkulation des Kaltwassers wird wiederum durch eine Zirkulationspumpe 13 sichergestellt. Über einen Steigstrang 12 werden mehrere Etagenstränge 4 versorgt, an welche jeweils mehrere Verbraucher 6 angeschlossen sind. An jedem in Strömungsrichtung hinter den angeschlossenen Verbrauchern 6 liegenden Ende der Etagenstränge 4 ist ein geregeltes Strangregulierventil 7,7.1 angeordnet. Wie bereits bezüglich Figur 1 beschrieben, hat dieses geregelte Strangregulierventil 7,7.1 unterhalb einer einstellbaren Temperatur einen Restvolumenstrom für die Ermittlung der aktuellen Temperatur des Wassers im entsprechenden Etagenstrang 4 durch den Thermofühler des Strangregulierventiles 7,7.1. Wird die eingestellte Temperatur überschritten, öffnet das geregelte Strangregulierventil 7,7.1 und der entsprechende Etagenstrang 4 wird vom maximalen Zirkulationsvolumen durchströmt. Somit ist ein schneller und gezielter Austausch des Wassers in dem entsprechenden Etagenstrang möglich. Über den Rücklaufstrang 11, der als Sammelstrang dient, wird das Wasser aus den Etagensträngen 4 wieder dem Kühlaggregat 3 zugeführt.

Dabei verhindert ein Rückflussverhinderer 16 unten im Rücklaufstrang und ein Rückflussverhinderer 16 in der Zulaufleitung des Frischwassers (Anschluss 1) bei fehlender Wassserabnahme ein Rückdrücken des Zirkulationswassers durch die Zirkulationspumpe 13 in das öffentliche Trinkwasserversorgungsnetz. Zudem verhindert der Rückflussverhinderer 16 zwischen dem Einmündungspunkt 15 und der Zirkulationspumpe 13, dass das Wasser aufgrund des durch einen Zapfvorgang entstehenden Druckabfalles entstehenden Differenzdruck entgegen der Zirkulationsrichtung strömen kann.

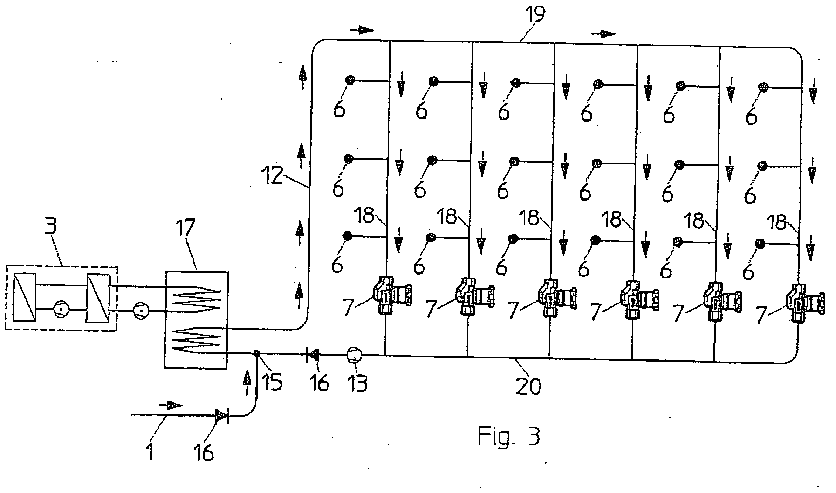

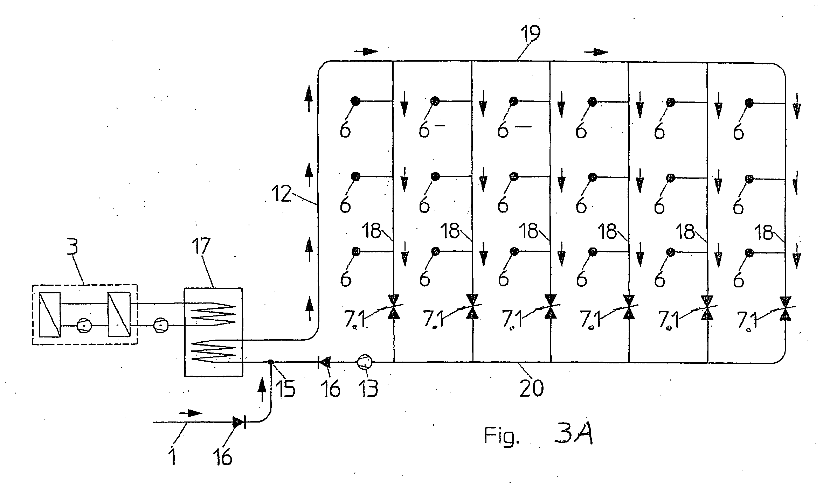

In Figur 3, 3A schließlich ist eine weitere Ausführungsform eines Kaltwasserzirkulationssystems dargestellt. Wie bereits in Figur 2 gezeigt, wird das Frischwasser über den Anschluss 1 über eine Einmündung 15 vor einer Kühleinrichtung 3 in das Zirkulationssystem eingeleitet. Die Kühleinrichtung 3 besteht bei dieser Ausführung aus einem Kühlaggregat (Bezugszeichen 3) zur Kälteerzeugung, vorzugsweise zum Beispiel eine Wärmepumpe und einem damit kommunizierenden Kältespeicher 17, in welchem die produzierte Kälte gespeichert wird. Das Trinkwasser des Zirkulationssystems ist durch diesen Kältespeicher 17 geführt. Hiermit lässt sich ein unzulässiger Temperaturanstieg bei großen Wasserverbräuchen verhindern. Bei geringem oder keinem Wasserverbrauch (zum Beispiel in der Nacht) kann dann der Speicher durch das Kühlaggregat (3) wieder auf das erforderliche Temperaturniveau heruntergekühlt werden. Die Zirkulation des Wassers wird wiederum durch die Zirkulationspumpe 13 aufrechterhalten, durch den Kältespeicher 17 geleitet und über den Steigstrang 12 zu dem oberen Verteilstrang 19 geleitet, welcher das Wasser auf einen oder mehrere Stockwerksstränge 18 verteilt. In diesen Stockwerkssträngen 18 sind wiederum mehrere Verbraucher 6 angeordnet, wobei im in Strömungsrichtung am Ende des Stockwerksstranges 18 befindlichen Bereich ein geregeltes Strangregulierventil 7, 7.1 in den Kreis eingeschaltet ist. Die Funktion dieses Strangregulierventils 7, 7.1 ist die gleiche, wie bei den anderen Ausführungsformen beschrieben, das heißt, unterhalb einer einstellbaren Temperatur lässt das geregelte Strangregulierventil 7,7.1 nur einen Restvolumenstrom zu. Wird die eingestellte Temperatur überschritten, wird der volle Durchfluss freigegeben und das Wasser des entsprechenden Stranges 18 in den Sammelstrang 20 geleitet, welches das Wasser der Kühleinrichtung 3 zuführt.

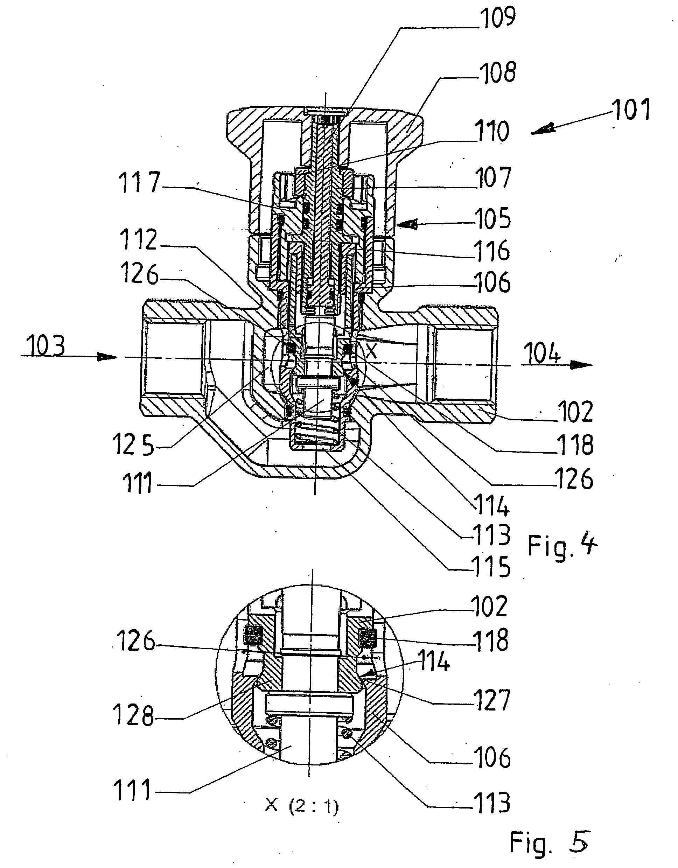

In Figur 4 ist ein temperaturgesteuertes Ventil 101, insbesondere Regulierventil, in einer Ausführungsform als Durchgangsventil gezeigt. Dabei ist ein Ventileinsatz 105 in ein Ventilgehäuse 102 eingesetzt, welches einen Einlass 103 und einen Auslass 104 aufweist. Der Ventileinsatz 105 ist mit seinem unteren Ende in eine Kammer 125 des Ventilgehäuses 102 eingesetzt. Das durchströmende Medium kann durch eine Bodenöffnung 115 einer Hülse 106 des Ventileinsatzes 105 einströmen und über radiale Öffnungen 126 der Hülse 106 abströmen und über den Auslass 104 abfließen. In der Hülse 106 des Ventileinsatzes 105 ist eine in den Zeichnungen oben von außen bedienbare Hauptspindel 107 gehalten. Zwischen dem innenliegenden Ende der Hauptspindel 107 und dem die Bodenöffnung 115 aufweisenden Boden der Hülse 106 ist ein Federelement 113 in Form einer Rückstellfeder angeordnet, die sich am Boden der Hülse 106 abstützt und an einem unter Temperatureinwirkung sich parallel zur Spindelachse ausdehnenden Thermoelement 111, welches sich wiederum am innenliegenden Spindelende abstützt. Das Thermoelement 111 ist mit einem Regelstück 112 zwangsgekoppelt, also vorzugsweise verbunden, welches mit seiner Außenumfangskontur 128 und einer im Inneren der Hülse 106 ausgebildeten Kontur 127 einen Strömungsspalt 114 bildet, über den das durchströmende Fluid zu den radialen Öffnungen 126 der Hülse 106 und folgend zum Auslass 104 strömen kann.

Das durchströmende Medium strömt durch die in Längsachse des Ventileinsatzes 105 liegende Bodenöffnung 115 und umspült das direkt im Volumenstrom befindliche Thermoelement 111. Dieses stützt sich an einer koaxial zur Hauptspindel 107 vorgesehenen weiteren Spindel 109 zur Temperatureinstellung ab.

In der Darstellung gemäß Figur 4 und 5 ist das Ventil 101 im Zustand "Restdurchfluss" gezeigt, das heißt, die Temperatur des durchströmenden Mediums ist kleiner oder gleich der fest eingestellten Solltemperatur oder der mit der Spindel 109 zur Temperatureinstellung eingestellten Solltemperatur. In dieser Stellung hat also der Strömungsspalt 114 seine kleinste Ausprägung. Der Volumenstrom ist nur so groß, dass das Thermoelement 111 ausreichend umspült wird, um die aktuelle Mediumtemperatur zu fühlen.

In Figur 5 ist ein Detailausschnitt in vergrößertem Maßstab gezeigt, der den Strömungsspalt 114 verdeutlicht.

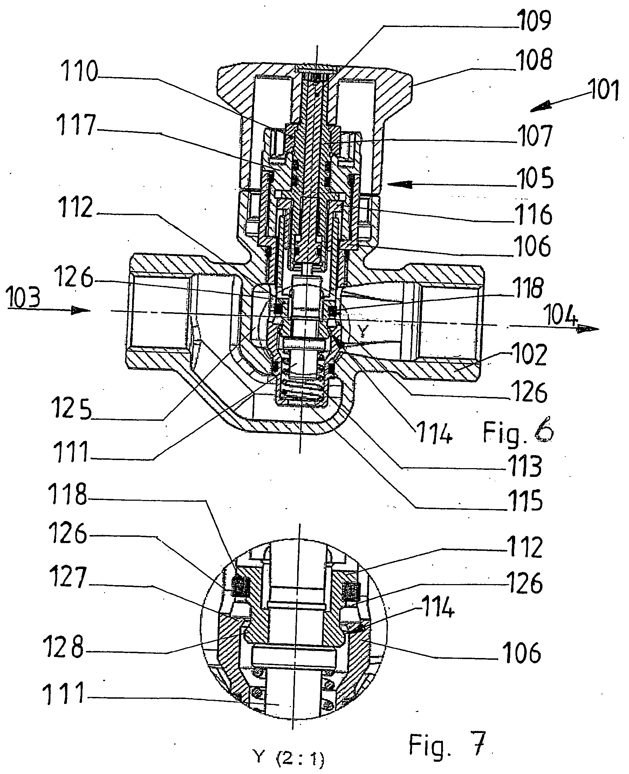

In Figur 6 ist das temperaturgesteuerte Regulierventil 101 im geöffneten Zustand dargestellt, das heißt, die Temperatur des durchströmenden Mediums ist größer als die fest eingestellte oder mittels der Temperatur Einstellspindel 109 eingestellte Solltemperatur. Aufgrund der höheren Temperatur des das Thermoelement 111 umströmende Mediums, dehnt sich dieses aus beziehungsweise dessen Ausdehnungselement und zwar in Richtung parallel zur Spindelachse. Die Stirnfläche der Hauptspindel 107 oder im Ausführungsbeispiel der Spindel 109 dient dem sich ausdehnenden Thermoelement 111 als fester Anschlag, so dass der Hub des Thermoelementes 111 von der Rückstellfeder 113 aufgenommen wird und somit axial in Richtung der Bodenöffnung 115 der Hülse 106 des Ventileinsatzes 105 erfolgt. Das mit dem Thermoelement 111 verbundene Regelstück 112 folgt zwangsläufig diesem axialen Hub, wodurch sich der Regelspalt 114 aufgrund der Verschiebung der Kontur 128 des Regelstückes 112 gegenüber der Kontur 127 der Hülse 106 vergrößert. Diese Vergrößerung des Strömungsspaltes 114 hat eine Vergrößerung des Volumenstroms zur Folge.

In Figur 7 ist das entsprechende Detail der Figur 6 im vergrößerten Maßstab gezeigt.

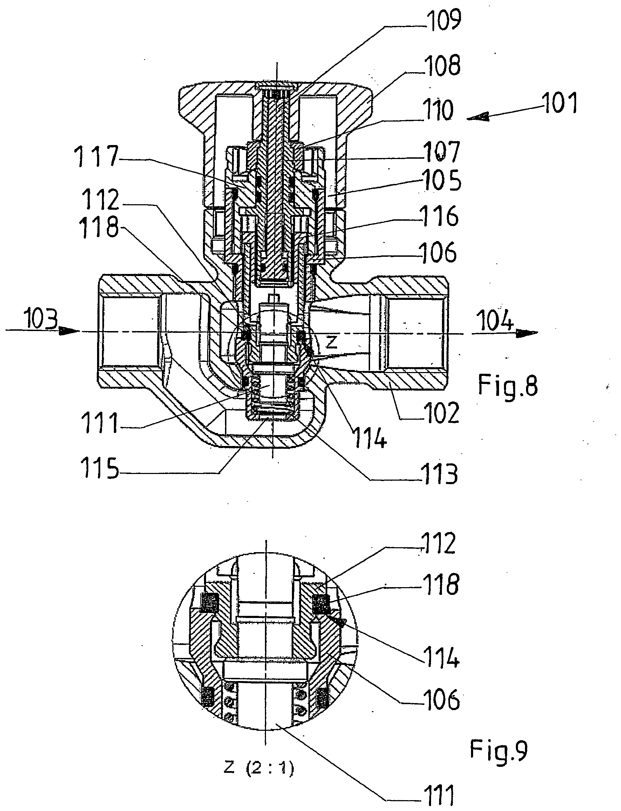

In Figur 8 und 9 ist eine weitere Besonderheit gezeigt. Hierbei ist in Figur 8 das Regulierventil in einem geschlossenem Zustand gezeigt. Durch Drehen eines auf der Hauptspindel 107 oben aufgesetzten Handrades 108 wird die in einer Kopfhülse 117 verdrehsicher gelagerte Mitnehmerhülse 116 mit Hilfe eines Bewegungsgewindes auf der Hauptspindel 107 axial verschoben. Beim Schließen des Ventils 101 erfolgt eine axiale Bewegung der Mitnehmerhülse 116 in Richtung der Bodenöffnung 115 der Hülse 106 des Ventileinsatzes 105, wobei das an der Mitnehmerhülse 116 gelagerte Regulierstück 112 in gleicher Richtung mitsamt dem Thermoelement 111 gegen die Kraft der Rückstellfeder 113 mitgenommen wird. Die Verschiebung erfolgt soweit, bis ein Dichtring 118, welcher an dem Regulierstück 112 befestigt ist, auf den Sitz des Regelspaltes 114 aufsetzt und damit den Volumenstrom absperrt.

Das entsprechende Detail ist im vergrößertem Maßstab in Figur 9 gezeigt.

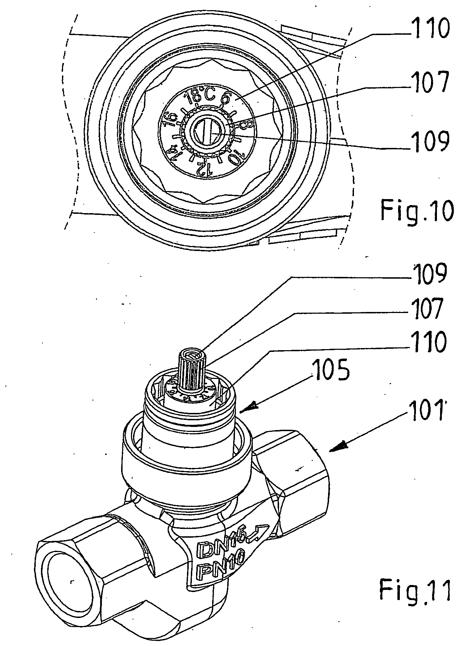

In Figur 10 und 11 ist gezeigt, wie die Einstellung der Temperatur erfolgen kann. Die Einstellung erfolgt mit der koaxial zur Hauptspindel 107 vorgesehenen Temperatureinstellspindel 109, welcher an ihrer oben außen liegenden Stirnseite eine Markierung aufweist. An der Hauptspindel 107 ist oben ein Skalenring 110 mit einem entsprechenden Temperaturbereich angebracht. Durch Drehen der Temperatureinstellspindel 109 relativ zur Hauptspindel 107 lässt sich die Markierung der Temperatureinstellspindel 109 auf eine bestimmte Temperatur auf dem Skalenring 110 einstellen. Die Drehbewegung der Temperatureinstellspindel 109 wird durch ein Gewinde in eine axiale Bewegung relativ zur Hauptspindel 107 gewandelt. Durch die axiale Bewegung der Temperatureinstellspindel 109 wird die Hublage des an der inneren des Ventils 101 liegenden Stirnseite der Temperatureinstellspindel 109 anliegenden Thermoelementes 111 entsprechend der Einstellung verschoben.

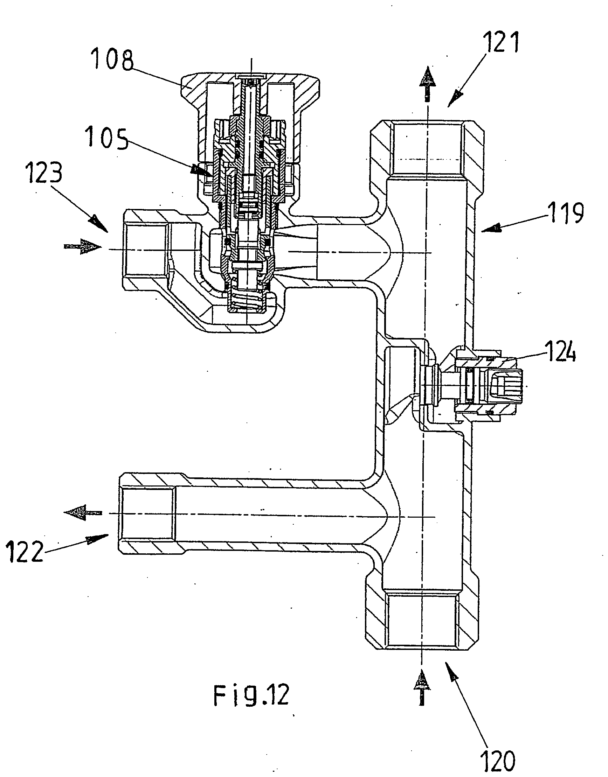

In Figur 12 ist eine Variante gezeigt. Hierbei ist eine Anschlussarmatur 119 für Ringleitungen vorgesehen. Ein Einlassanschluss 120 und ein Auslassanschluss 121 binden die Anschlussarmatur 119 in den Strang eines Trinkwassersystems ein. In Strömungsrichtung des Mediums, verdeutlicht durch Pfeile, dem Einlassanschluss 120 folgend zweigt ein Auslassanschluss 122 zu einer Ringleitung mit einem oder mehreren Verbrauchern ab. Im Anschluss an die Verbraucher wird die Ringleitung über den Einlassanschluss 123 an die Anschlussarmatur 119 angeschlossen. Dem Einlassanschluss 123 von der Ringleitung folgend ist der Ventileinsatz 105 angeordnet. Das Gehäuse der Anschlussarmatur bildet also die Aufnahme für den Ventileinsatz 105 und die entsprechende Zufluss- und Abflussmöglichkeit.

Durch den entsprechenden Ventileinsatz 105 wird der Volumenstrom auf einen Restdurchfluss reduziert, so lange die Temperatur des durchfließenden Mediums unter der am Ventileinsatz 105 eingestellten Temperatur liegt. In Strömungsrichtung dem Ventileinsatz 105 folgend mündet der Anschluss wieder in das Gehäuse der Anschlussarmatur 119. In der im Ausführungsbeispiel geraden Verbindung zwischen den Anschlüssen 120 und 121 und den Abzweigungen zur und von der Ringleitung 122 und 123 kann ein hydraulischer Widerstand, beispielsweise im Ausführungsbeispiel ein Drosselventil 124 eingebaut werden. Der Einbau solcher Anschlussarmaturen 119 in das KaltwasserZirkulationssystem ermöglicht den hydraulischen Abgleich von Strömungswiderständen in unterschiedlichen Anlageteilen. Die Zeichnungsfigur stellt nur eine prinzipielle Anordnung solcher Komponenten dar.

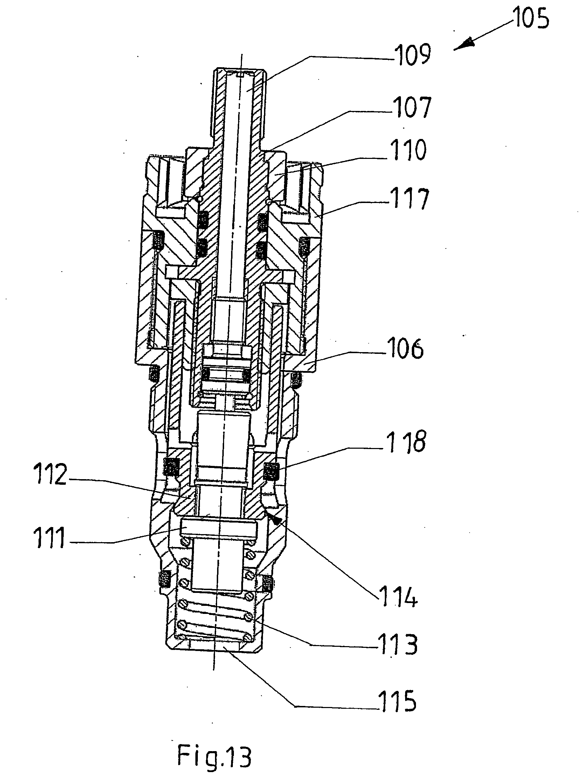

In Figur 13 schließlich ist ein entsprechender Ventileinsatz 105 wie er in dem Durchgangsventil gemäß Figur 4 oder in der Anschlussarmatur 119 gemäß Figur 12 verwendet wird, gezeigt.

## Patentansprüche

1. Trink- oder Brauchwassersystem mit einem Leitungssystem, das einen Anschluss (1) an ein öffentliches Wasserversorgungsnetz aufweist, sowie mindestens einen Vorlaufstrang oder Steigstrang (12) mit mindestens einem davon abzweigenden Stockwerksstrang (4,18) und/oder mindestens einer in Durchströmrichtung des Wassers vom Steigstrang (12) und/oder vom Stockwerksstrang (4,18) abgezweigten Ringleitung (5), sowie mindestens einem am Steigstrang (12) und/oder am Stockwerksstrang (4,18) und/oder in der Ringleitung (5) angeschlossenen Verbraucher (6) sowie einem Rücklaufstrang (11,20), in den der Vorlaufsstrang und/oder der Steigstrang (12) und/oder der Stockwerksstrang (4,18) und/oder die Ringleitung (5) mündet, **wobei** das Leitungssystem aus Vorlaufstrang oder Steigstrang (12) und Rücklaufstrang (11,20) einen geschlossenen Zirkulationsstrang bildet, und wobei in diesen Zirkulationsstrang eine Einrichtung (3) zur Kühlung des durchströmenden Wassers integriert ist, mittels derer das Trink- oder Brauchwasser auf eine vorbestimmte Temperatur kühlbar ist oder gekühlt wird, **dadurch gekennzeichnet, dass** in eine oder jede Ringleitung (5) mit wenigstens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des die Ringleitung (5) durchströmenden Wassers den Durchfluss bis zu einem maximalen Wert öffnet und bei darunter liegender Temperatur den Durchfluss auf einen minimalen Wert begrenzt, wobei das Strangregulierventil (7,7.1) vorzugsweise innerhalb der Ringleitung (5) deren in Strömungsrichtung letztem Verbraucher (6) nachgeschaltet ist oder in eine Einbindearmatur zwischen Ringleitung (5) und Hauptleitung des Leitungssystems integriert ist oder **dass** mindestens in einen oder jeden Stockwerksstrang (4,18) mit mindestens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des den Stockwerksstrang (4,18) durchströmenden Wassers den Durchfluss bis zu einem maximalen Wert öffnet und bei darunter liegender Temperatur den Durchfluss auf einen minimalen Wert begrenzt, wobei das Strangregulierventil (7,7.1) vorzugsweise in den Stockwerksstrang (4,18) dem darin integrierten in Strömungsrichtung des Wassers letzten Verbraucher (6) nachgeschaltet ist oder in eine Einbindearmatur zwischen Stockwerksstrang (4,18) und Hauptleitung des Leitungssystems integriert ist oder **dass** mindestens in einen Steigstrang (12) mit mindestens einem Verbraucher (6) ein geregeltes Strangregulierventil (7,7.1) eingeschaltet ist, welches in Abhängigkeit von einer einstellbaren Temperatur bei oberhalb eines Sollwertes liegender Temperatur des den Steigstrang (12) durchströmenden Wasser den Durchfluss bis zu einem maximalen Wert öffnet und bei darunter liegender Temperatur den Durchfluss auf einen minimalen Wert begrenzt, wobei das Strangregulierventil (7,7.1) vorzugsweise dem in Strömungsrichtung letzten Verbraucher (6) nachgeschaltet ist.

2. Trink- oder Brauchwassersystem nach Anspruch 1, **dadurch gekennzeichnet, dass** der Anschluss (1) an das Wasserversorgungsnetz zwischen den Ausgang der Kühleinrichtung (3) und den Vorlauf- oder Steigstrang (12) geschaltet ist.

3. Trink- oder Brauchwassersystem nach Anspruch 1, **dadurch gekennzeichnet, dass** der Anschluss (1) an das Wasserversorgungsnetz in Strömungsrichtung vor den Eingang der Kühleinrichtung (3) in die Ringleitung eingeschaltet ist.

4. Trink- oder Brauchwassersystem nach einem der Ansprüche 1 bis 3, **dadurch gekennzeichnet, dass** in die Stockwerksstränge, die parallel zu den Ringleitungen (5) geschaltet sind, statische Strangregulierventile (10) für einen hydraulischen Abgleich der Leitungen untereinander installiert sind.

5. Trink- oder Brauchwassersystem nach einem der Ansprüche 1 bis 3, **dadurch gekennzeichnet, dass** mindestens in einem oder jedem Stockwerksstrang (4,18) mit mindestens einem Verbraucher (6) ein statisches Strangregulierventil (7.1) für einen hydraulischen Abgleich der Leitungen untereinander installiert ist, wobei das Strangregulierventil (7.1) vorzugsweise in den Stockwerksstrang (4,18) dem darin integrierten in Strömungsrichtung des Wassers letzten Verbraucher nachgeschaltet ist oder in eine Einbindearmatur zwischen Stockwerksstrang (4,18) und Hauptleitung des Leitungssystems integriert ist.

6. Trink- oder Brauchwassersystem nach einem der Ansprüche 1 bis 3, **dadurch gekennzeichnet, dass** mindestens in einem oder jedem Steigstrang (12) mit mindestens einem Verbraucher (6) ein statisches Strangregulierventil (7.1) für einen hydraulischen Abgleich der Leitungen untereinander installiert ist, wobei das Strangregulierventil (7.1) vorzugsweise in dem Steigstrang (12) dem darin integrierten in Strömungsrichtung des Wassers letzten Verbraucher nachgeschaltet ist oder in eine Einbindearmatur zwischen Steigstrang (12) und Hauptleitung des Leitungssystems integriert ist.

7. Trink- oder Brauchwassersystem nach einem der Ansprüche 1 bis 6, **dadurch gekennzeichnet, dass** das geregelte Strangregulierventil (7,7.1) durch einen Temperaturmessfühler oder ein eine Temperatur erfassendes Stellglied gesteuert ist, welcher oder welches im Strömungsweg des Wassers durch das Strangregulierventil (7,7.1) angeordnet ist.

8. Trink- oder Brauchwassersystem nach einem der Ansprüche 1 bis 7, **dadurch gekennzeichnet, dass** zwischen den Anschluss (1) an das öffentliche Wasserversorgungsnetz und das Leitungssystem ein Filter (2) zur Herausfilterung von Keimen installiert ist.

9. Trink- oder Brauchwassersystem nach einem der Ansprüche 1 bis 8, **dadurch gekennzeichnet, dass** in dem Zirkulationsstrang eine Zirkulationspumpe (13) installiert ist.

## Claims

1. A drinking water or sanitary water system comprising a line system including a connection (1) to a public water supply system, and at least one forward-flow line or riser (12) with at least one floor line (4, 18) branching therefrom and/or at least one annular line (5) branching, in the flow direction of the water, from the riser (12) and/or from floor line (4, 18), and at least one consumer (6) connected at the riser (12) and/or at the floor line (4, 18) and/or in the annular line (5), and a return line (11, 20), into which the forward-flow line and/or the riser (12) and/or the floor line (4, 18) and/or the annular line (5) opens out, the line system of forward-flow line or riser (12) and return line (11, 20) forming a closed circulation line, and in this circulation line a device (3) for cooling the flowing water being integrated, by means of which the drinking or sanitary water can be cooled or is cooled to a predetermined temperature, **characterized by that** in one or each annular line (5) with at least one consumer (6) a controlled line regulation valve (7, 7.1) is connected, which, depending on an adjustable temperature, for a temperature above a design value of the water flowing through the annular line (5), opens the flow up to a maximum value, and for a lower temperature, limits the flow to a minimum value, the line regulation valve (7, 7.1) preferably being connected within the annular line (5), in the flow direction, downstream of the last consumer (6) or being integrated in an intermediate fitting between annular line (5) and main line of the line system, or **that** at least in one or each floor line (4, 18) with at least one consumer (6) a controlled line regulation valve (7, 7.1) is connected, which, depending on an adjustable temperature, for a temperature above a design value of the water flowing through the floor line (4, 18), opens the flow up to a maximum value, and for a lower temperature, limits the flow to a minimum value, the line regulation valve (7, 7.1) preferably being connected in the floor line (4, 18), in the flow direction of the water, downstream of the last consumer (6) integrated therein or being integrated in an intermediate fitting between floor line (4, 18) and main line of the line system, or **that** at least in a riser (12) with at least one consumer (6) a controlled line regulation valve (7, 7.1) is connected, which, depending on an adjustable temperature, for a temperature above a design value of the water flowing through the riser (12), opens the flow up to a maximum value, and for a lower temperature, limits the flow to a minimum value, the line regulation valve (7, 7.1) preferably being connected, in the flow direction, downstream of the last consumer (6).

2. The drinking or sanitary water system according to claim 1, **characterized by that** the connection (1) to the water supply system is connected between the exit of the cooling device (3) and the forward-flow line or riser (12).

3. The drinking or sanitary water system according to claim 1, **characterized by that** the connection (1) to the water supply system is connected, in the flow direction, upstream of the entry of the cooling device (3) into the annular line.

4. The drinking or sanitary water system according to one of claims 1 to 3, **characterized by that** in the floor lines that are connected in parallel to the annular lines (5), static line regulation valves (10) for a hydraulic compensation of the lines among each other are installed.

5. The drinking or sanitary water system according to one of claims 1 to 3, **characterized by that** in at least one or each floor line (4, 18) with at least one consumer (6), a static line regulation valve (7.1) for a hydraulic compensation of the lines among each other is installed, the line regulation valve (7.1) preferably being connected in the floor line (4, 18), in the flow direction of the water, downstream of the last consumer integrated therein or being integrated in an intermediate fitting between floor line (4, 18) and main line of the line system.

6. The drinking or sanitary water system according to one of claims 1 to 3, **characterized by that** in at least one or each riser (12) with at least one consumer (6), a static line regulation valve (7.1) for a hydraulic compensation of the lines among each other is installed, the line regulation valve (7.1) preferably being connected in the riser (12), in the flow direction of the water, downstream of the last consumer integrated therein or being integrated in an intermediate fitting between riser (12) and main line of the line system.

7. The drinking or sanitary water system according to one of claims 1 to 6, **characterized by that** the line regulation valve (7, 7.1) is controlled by a temperature sensor or an actuator detecting a temperature, which is disposed in the flow path of the water through the line regulation valve (7, 7.1).

8. The drinking or sanitary water system according to one of claims 1 to 7, **characterized by that** between the connection (1) to the public water supply network and the line system, a filter (2) for filtering out germs is installed.

9. The drinking or sanitary water system according to one of claims 1 to 8, **characterized by that** in the circulation line, a circulation pump (13) is installed.

## Revendications

1. Système d'eau potable ou d'eau sanitaire comprenant un système de rames comportant un raccordement (1) à un réseau public de distribution d'eau, et au moins une voie aller ou boucle de colonne montante (12) avec au moins une boucle d'étage (4, 18) dérivée de celle-ci et/ou au moins une conduite annulaire (5) dérivée, dans le sens d'écoulement de l'eau, de la boucle de colonne montante (12) et/ou de la boucle d'étage (4, 18), et au moins un consommateur (6) raccordé à la boucle de colonne montante (12) et/ou à la boucle d'étage (4, 18) et/ou dans la conduite annulaire (5), et une conduite de retour (11, 20), dans laquelle la voie aller et/ou la boucle de colonne montante (12) et/ou la boucle d'étage (4, 18) et/ou la conduite annulaire (5) débouche, le système de rames de voie aller ou boucle de colonne montante (12) et conduite de retour (11, 20) réalisant une voie de circulation fermée, et que dans cette voie de circulation un dispositif (3) de refroidissement de l'eau traversante est intégré, au moyen duquel l'eau potable ou sanitaire peut être refroidie ou est refroidie à une température prédéterminée, **caractérisé en ce que** dans une ou chaque conduite annulaire (5) avec au moins un consommateur (6) une vanne de régulation réglée de la voie (7, 7.1) est prévue, qui, en fonction d'une température réglable, à une température au-dessus d'une valeur de consigne de l'eau passant à travers la conduite annulaire (5), ouvre le débit jusqu'à une valeur maximale, et à une température plus basse, limite le débit à une valeur minimale, la vanne de régulation de la voie (7, 7.1) de préférence étant placée au-dedans de la conduite annulaire (5) dans le sens écoulement en aval du dernier consommateur (6) ou est intégré dans une armature intermédiaire entre conduite annulaire (5) et la voie principale du système de rames, ou **qu'**au moins dans une ou chaque boucle d'étage (4, 18) avec au moins un consommateur (6) une vanne de régulation réglée de la voie (7, 7.1) est prévue, qui, en fonction d'une température réglable, à une température au-dessus d'une valeur de consigne de l'eau passant à travers la boucle d'étage (4, 18), ouvre le débit jusqu'à une valeur maximale, et à une température plus basse, limite le débit à une valeur minimale, la vanne de régulation de la voie (7, 7.1) de préférence étant placée dans la boucle d'étage (4, 18) dans le sens écoulement de l'eau en aval du dernier consommateur (6) intégré là-dedans ou étant intégrée dans une armature intermédiaire entre la boucle d'étage (4, 18) et la voie principale du système de rames, ou **que** dans au moins une boucle de colonne montante (12) avec au moins un consommateur (6) une vanne de régulation réglée de la voie (7, 7.1) est prévue, qui, en fonction d'une température réglable, à une température au-dessus d'une valeur de consigne de l'eau passant à travers la boucle de colonne montante (12), ouvre le débit jusqu'à une valeur maximale, et à une température plus basse, limite le débit à une valeur minimale, la vanne de régulation de la voie (7, 7.1) de préférence étant placée dans le sens écoulement en aval du dernier consommateur (6).

2. Système d'eau potable ou d'eau sanitaire selon la revendication 1, **caractérisé en ce que** le raccordement (1) au réseau public de distribution d'eau est prévu entre la sortie du dispositif de refroidissement (3) et la voie aller ou la boucle de colonne montante (12).

3. Système d'eau potable ou d'eau sanitaire selon la revendication 1, **caractérisé en ce que** le raccordement (1) au réseau public de distribution d'eau est prévu, dans le sens écoulement, en amont de l'entrée du dispositif de refroidissement (3) dans la conduite annulaire.

4. Système d'eau potable ou d'eau sanitaire selon une des revendications 1 à 3, **caractérisé en ce que** dans les boucles d'étage qui sont raccordées en parallèle aux conduites annulaires (5), des vannes de régulation statiques (10) de la voie sont installées pour une compensation hydraulique des voies entre elles.

5. Système d'eau potable ou d'eau sanitaire selon une des revendications 1 à 3, **caractérisé en ce que** dans au moins une ou chaque boucle d'étage (4, 18) avec au moins un consommateur (6), une vanne de régulation statique (7.1) de la voie pour une compensation hydraulique des voies entre elles est prévue, la vanne de régulation de la voie (7.1) de préférence étant placée dans la boucle d'étage (4, 18) dans le sens écoulement de l'eau en aval du dernier consommateur intégré là-dedans ou étant intégrée dans une armature intermédiaire entre la boucle d'étage (4, 18) et la voie principale du système de rames.

6. Système d'eau potable ou d'eau sanitaire selon une des revendications 1 à 3, **caractérisé en ce que** dans au moins une ou chaque boucle de colonne montante (12) avec au moins un consommateur (6), une vanne de régulation statique (7.1) de la voie pour une compensation hydraulique des voies entre elles est prévue, la vanne de régulation de la voie (7.1) de préférence étant placée dans la boucle de colonne montante (12) dans le sens écoulement de l'eau en aval du dernier consommateur intégré là-dedans ou étant intégrée dans une armature intermédiaire entre la boucle de colonne montante (12) et la voie principale du système de rames.

7. Système d'eau potable ou d'eau sanitaire selon une des revendications 1 à 6, **caractérisé en ce que** la vanne de régulation de la voie (7, 7.1) est réglée par un capteur de température ou un actionneur détectant une température, qui est disposé dans le chemin d'écoulement de l'eau à travers la vanne de régulation (7, 7.1) de la voie.

8. Système d'eau potable ou d'eau sanitaire selon une des revendications 1 à 7, **caractérisé en ce qu'**entre le raccordement (1) au réseau public de distribution d'eau et le système de rames, un filtre (2) pour filtrer des germes est installé.

9. Système d'eau potable ou d'eau sanitaire selon une des revendications 1 à 8, **caractérisé en ce que** dans la voie de circulation, une pompe de circulation (13) est installée.
